# FASCICULE DE BREVET EUROPEEN

(11) **EP 3 253 633 B1**
(45) Date de publication et mention de la délivrance du brevet: **19.12.2018**
(21) Numéro de dépôt: 16706675.2
(22) Date de dépôt: 29.01.2016
(51) Int. Cl.: B60W 10/113, B60K 1/02, B60K 6/48, B60K 6/547, F16H 61/688, F16H 3/00, F16H 3/08, F16H 3/093

(54) **TRANSMISSION HYBRIDE POUR VEHICULE AUTOMOBILE ET PROCEDE DE TRANSMISSION DU COUPLE D'UNE MACHINE ELECTRIQUE DE TRACTION**
HYBRIDGETRIEBE FÜR KRAFTFAHRZEUG UND VERFAHREN ZUR ÜBERTRAGUNG DES DREHMOMENTS EINER ELEKTRISCHEN ZUGMASCHINE
HYBRID TRANSMISSION FOR MOTOR VEHICLE AND METHOD FOR TRANSMITTING THE TORQUE OF AN ELECTRIC TRACTION MACHINE

(30) Priorité: 06.02.2015 FR 1550927
(43) Date de publication de la demande: 13.12.2017
(73) Titulaire: Renault S.A.S., 92100 Boulogne-Billancourt (FR)
(72) Inventeur: FREMAU, Nicolas, 78470 Saint Remy les Chevreuse (FR); KETFI-CHERIF, Ahmed, 78990 Elancourt (FR); VIGNON, Antoine, 91430 Igny (FR)
(86) Numéro de dépôt international: PCT/FR2016/050188
(87) Numéro de publication internationale: WO 2016/124839

(56) Documents cités:
- DE-A1- 10 019 597
- DE-A1- 10 052 393
- DE-A1- 19 960 621
- DE-A1-102011 005 451
- DE-A1-102012 015 434
- FR-A1- 2 805 221
- US-A1- 2012 006 153

## Description

La présente invention se rapporte aux architectures de transmissions hybrides pour véhicule automobile.

Plus précisément, elle a pour objet une transmission hybride pour véhicule automobile muni d'un moteur thermique et d'une machine électrique de traction, comportant deux arbres primaires concentriques respectivement liés au moteur thermique et à la machine électrique, dans laquelle l'arbre primaire plein peut être connecté, soit à l'arbre primaire creux dans un mode de recharge de batteries ou sur des modes de traction hybrides, soit à une descente d'engrenage sur un arbre secondaire relié aux roues du véhicule dans des modes de traction thermique, ou hybrides.

L'invention a également pour objet un procédé de transmission du couple d'une machine électrique de traction de véhicule reliée à un arbre primaire creux de transmission hybride concentrique d'un arbre primaire plein relié au moteur thermique du véhicule.

Les transmissions hybrides de véhicule automobile comportant deux arbres primaires concentriques, reliés respectivement au moteur thermique du véhicule et à une machine électrique de traction, permettent de cumuler des modes de traction thermique, électriques et hybrides dans un environnement particulièrement compact, qui ne nécessite pas d'embrayage d'entrée entre le moteur et la transmission.

FR 2 805 221 divulgue une transmission hybride pour véhicule automobile muni d'un moteur thermique et d'une machine électrique de traction, comportant deux arbres primaires concentriques respectivement liés au moteur thermique et à la machine électrique, dans laquelle l'arbre primaire plein peut être connecté soit à l'arbre primaire creux dans un mode de recharge de batteries ou sur des modes de traction hybrides, soit à une descente d'engrenage sur un arbre secondaire relié aux roues du véhicule dans des modes de traction thermique ou hybrides, dans certains modes de traction électriques ou hybrides, le couple de la machine électrique passe de l'arbre primaire creux sur un arbre intermédiaire de transfert vers un arbre de sélection de rapports électriques, d'où il peut être transmis à l'arbre secondaire, sur l'un de deux rapports électriques sélectionnables.

Par la publication FR 2 973 299, on connaît une transmission hybride, sans embrayage d'entrée, avec deux arbres primaires concentriques, et un arbre secondaire relié aux roues du véhicule. Cette transmission comporte deux organes de couplage, dont l'un est disposé entre les arbres primaires, de manière à pouvoir occuper trois positions dans lesquelles :
- le moteur thermique est découplé de la chaîne cinématique reliant la machine électrique aux roues du véhicule, ou couplé à celle-ci,
- l'arbre primaire relié au moteur thermique est couplé à un arbre secondaire pour entraîner les roues avec l'appoint de la machine électrique, et
- l'arbre primaire relié au moteur thermique est couplé à l'arbre primaire de la machine électrique de manière à additionner leurs couples en direction des roues du véhicule.

Cette transmission n'a pas d'embrayage d'entrée entre le moteur thermique et l'arbre primaire. Elle dispose de trois rapports de marche avant, dont deux premiers rapports sont utilisables dans des modes électriques et hybrides, et un troisième est utilisable en mode thermique et hybride. Elle dispose également d'un mode de recharge à l'arrêt de la machine électrique par le moteur thermique. Son encombrement en longueur est déterminé par la juxtaposition de trois dentures, de deux groupes crabots, et d'un pignon d'attaque du différentiel.

La présente invention a pour but de réaliser une transmission hybride qui assure des fonctions équivalentes ou supérieures, tout en étant moins longue.

Dans ce but, elle propose que, dans certains modes de traction électriques ou hybrides, le couple de la machine électrique passe de l'arbre primaire creux, sur un arbre intermédiaire de transfert vers un arbre de sélection de rapports électriques, d'où il peut être transmis à l'arbre secondaire, sur l'un de deux rapports électriques sélectionnables.

Grâce à cette disposition, les deux groupes de couplage, peuvent être placés l'un en dessous de l'autre dans la boîte, et la descente d'engrenage du primaire plein sur le secondaire peut être placée sous un autre engrenage. On peut donc gagner la longueur d'une denture et d'un groupe de couplage sur le secondaire. La transmission est plus courte que dans l'exemple cité, car sa longueur est déterminée par la juxtaposition de seulement trois dentures et un groupe de couplage, au lieu de trois dentures, deux groupes de couplage et un pignon d'attaque dans l'exemple cité.

Selon un premier mode de réalisation, l'arbre de sélection électrique porte un premier groupe de couplage double d'un pignon fou de sélection de premier rapport et d'un pignon fou de deuxième rapport, tandis que l'arbre primaire plein porte un pignon fou de sélection de troisième rapport et un deuxième groupe de couplage double des arbres primaires et du pignon fou de troisième rapport.

Selon un deuxième mode de réalisation, l'arbre de sélection électrique porte un premier groupe de couplage double, d'un pignon fou de premier rapport et d'un pignon fou de troisième rapport, tandis que l'arbre primaire porte un deuxième groupe de couplage double, des arbres primaires d'un pignon fou de sélection de deuxième rapport.

D'autres caractéristiques et avantages de la présente invention ressortiront clairement à la lecture de la description suivante d'un mode de réalisation non limitatif de celle-ci, en se reportant aux dessins annexés, sur lesquels :
- la figure 1 est un schéma d'architecture d'une première réalisation de la transmission proposée,
- la figure 2 est une coupe transversale simplifiée de celle-ci,
- la figure 3 montre la transmission au point mort,
- la figure 4 montre un deuxième rapport électrique,
- la figure 5 montre un premier rapport électrique,
- la figure 6 montre un mode de recharge à l'arrêt,
- la figure 7 montre un premier rapport hybride,
- la figure 8 montre un deuxième rapport hybride,
- la figure 9 montre un troisième rapport hybride,
- la figure 10 montre un autre chemin du couple électrique sur le troisième rapport hybride,
- la figure 11 montre encore un autre chemin du couple électrique sur le troisième rapport hybride,
- la figure 12 illustre un deuxième mode de réalisation de la transmission,
- la figure 13 illustre une première variante de la figure 12,
- la figure 14 illustre une deuxième variante de la figure 12, et
- la figure 15 illustre un troisième mode de réalisation, mixte, de la transmission.

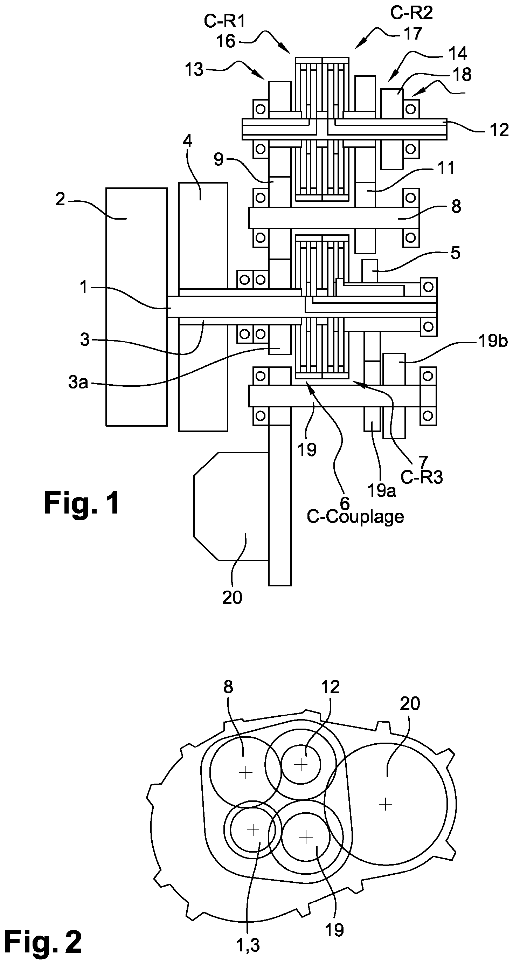

Sur les figures 1 et 2, on a représenté schématiquement une transmission hybride pour véhicule automobile muni d'un moteur thermique et d'une machine électrique de traction 4, conforme à un premier mode de réalisation de l'invention. Cette transmission hybride comporte deux arbres primaires concentriques 1, 3 respectivement liés au volant moteur 2 du moteur thermique et à la machine électrique 4. L'arbre primaire plein 1 peut être connecté soit à l'arbre primaire creux 3, dans un mode de recharge de batteries ou sur des modes de traction hybrides, soit à une descente d'engrenage 5, 19a sur un arbre secondaire 19 relié aux roues du véhicule, dans des modes de traction thermique ou hybrides.

La transmission comporte quatre arbres, dont la disposition dans l'espace est montrée par la figure 2 : la ligne primaire est double, et composée d'un arbre plein 1 et un arbre creux 2 concentriques ; l'arbre primaire plein 1 est relié au volant moteur 2 du moteur thermique (non représenté), par exemple de type double volant amortisseur. L'arbre primaire creux 3, est relié à la machine électrique de traction 4. Sur la figure 1, on voit au-dessus des 35 arbres primaires 1, 3, un arbre de transfert 8 qui transmet le mouvement de la ligne primaire sur un arbre de sélection de rapports électriques 12. L'arbre secondaire 19 de la transmission, est relié à l'arbre de sélection électrique 12 et au différentiel 20. Dans certains modes de traction électriques ou hybrides, le couple de la machine électrique 4 passe de l'arbre primaire creux 3 sur l'arbre intermédiaire de transfert 8 vers l'arbre de sélection de rapports électriques 12, d'où il peut être transmis à l'arbre secondaire 19 par l'engrenage 18, 19b, sur l'un de deux rapports électriques sélectionnables.

L'arbre primaire plein 1 porte un pignon fou de troisième rapport 5 et un groupe de couplage double 6, 7, composé d'un premier coupleur 6 des arbres primaires (C-Couplage), et d'un deuxième coupleur 7, de troisième rapport (R3). Ces coupleurs sont par exemple des embrayages humides, des coupleurs coniques, ou un gros synchroniseur...). L'arbre primaire creux 3 engrène par son pignon de transfert 3a, avec l'arbre de transfert 8 portant au moins deux pignons fixes 9, 11 de rapports électriques R1 et R2, engrenant avec deux pignons fous 13, 14 sur l'arbre de sélection électrique 12. L'arbre 12 porte un deuxième groupe de couplage double 16, 17 des rapports R1 et 2, et un pignon de renvoi 18 sur un pignon d'attaque 19b de l'arbre secondaire 19 de la transmission.

Le premier coupleur 6 de la ligne primaire, permet de coupler l'arbre primaire creux 3 et l'arbre plein 1, de manière à additionner leurs couples en mode hybride. Le deuxième coupleur 7 permet de sélectionner le troisième rapport. Une des particularités de cette transmission et de pouvoir utiliser simultanément ces deux moyens de couplage pour bénéficier d'un mode thermique et d'un mode hybride (moteur thermique plus machine électrique) sur le même rapport. En résumé, l'arbre de sélection électrique 12 porte un premier groupe de couplage double 16, 17 du pignon fou de sélection de premier rapport 13 et du pignon fou de deuxième rapport 14, tandis que l'arbre primaire plein 1 porte un pignon fou de sélection de troisième rapport 5 et un deuxième groupe de couplage double 6, 7 des arbres primaires 1, 3, et du pignon fou de troisième rapport 5. Dans ce premier mode de réalisation, les groupes de couplage 16, 17 et 6, 7 sont composés de préférence d'embrayages multidisques.

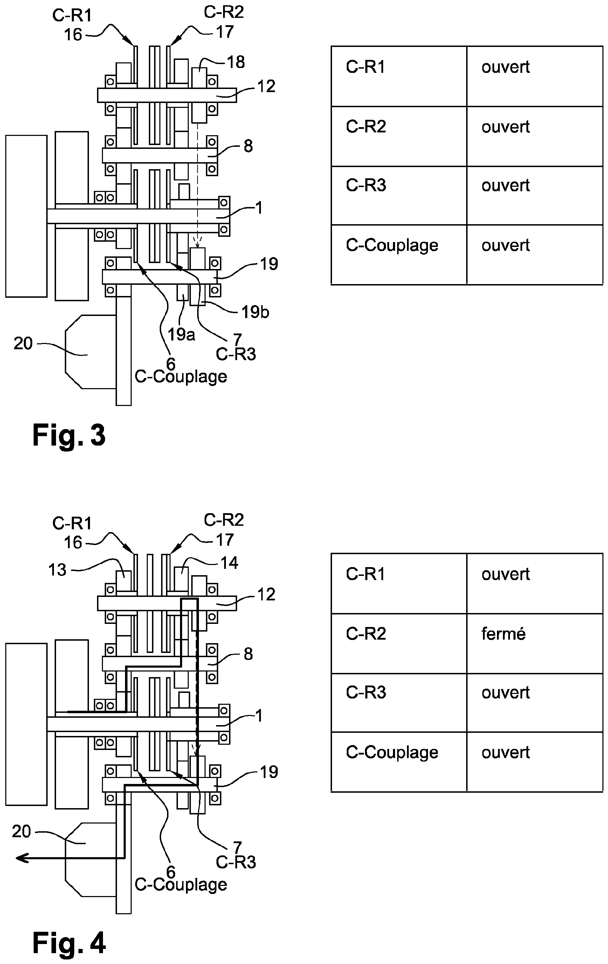

Sur les figures 1 et 3, les quatre coupleurs, C-Couplage, C-R1, C-R2, C-R3, C-R4 sont ouverts. Aucun couple n'est transmis aux roues du véhicule, et la transmission est au point mort.

La figure 4, illustre le deuxième rapport en mode électrique R2. Le Coupleur C-R2 est fermé. Le couple fourni par la machine électrique 4 transite de l'arbre creux 3 et de son pignon de transfert 3a sur l'arbre intermédiaire 8. De là, il passe sur l'arbre de sélection électrique 12 par l'engrenage 11, 14, puis sur l'arbre secondaire par l'engrenage 18, 19a. Cet état de la transmission convient pour rouler à des vitesses intermédiaires en mode électrique. On peut ainsi le qualifier de « *mode électrique route* ».

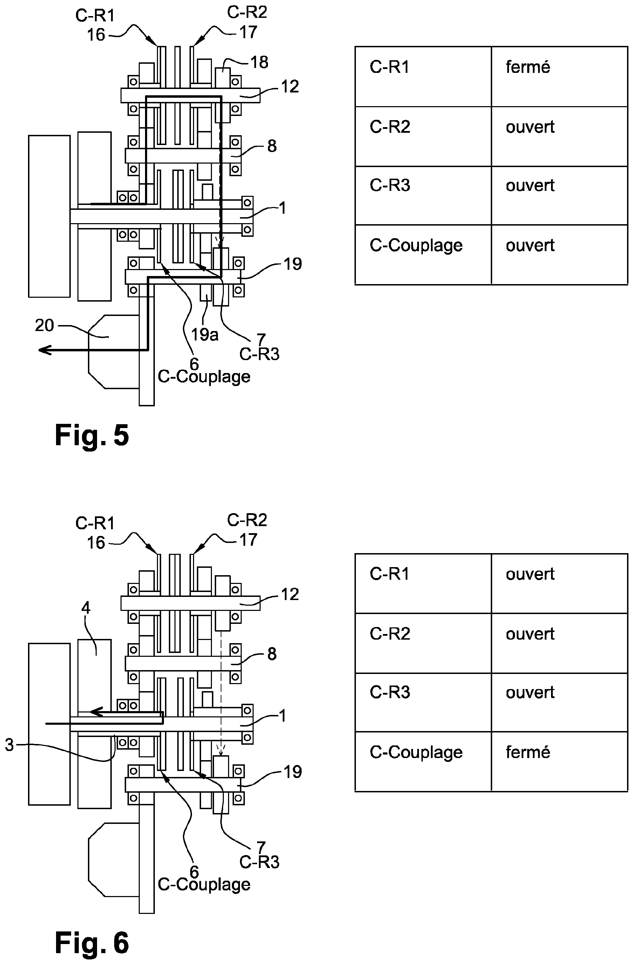

Sur la figure 5, c'est le coupleur de premier rapport électrique C-R1 qui est fermé, à la place de C-R2. De l'arbre intermédiaire 8, le couple passe sur l'arbre de sélection électrique 12 par l'engrenage 9, 13, puis sur l'arbre secondaire 19 par l'engrenage 18, 19a. Cet état de la transmission convient pour rouler à des vitesses moindres, en mode électrique. On peut ainsi le qualifier de « *mode électrique ville* ».

Dans le mode « *smart charge* », ou recharge à l'arrêt, de la figure 6, le coupleur C-Couplage 6 est fermé. Les deux arbres primaires 1, 3 sont couplés. Lorsque le moteur thermique tourne, son mouvement est transmis à la machine électrique 4, fonctionnant en générateur pour recharger les batteries du véhicule.

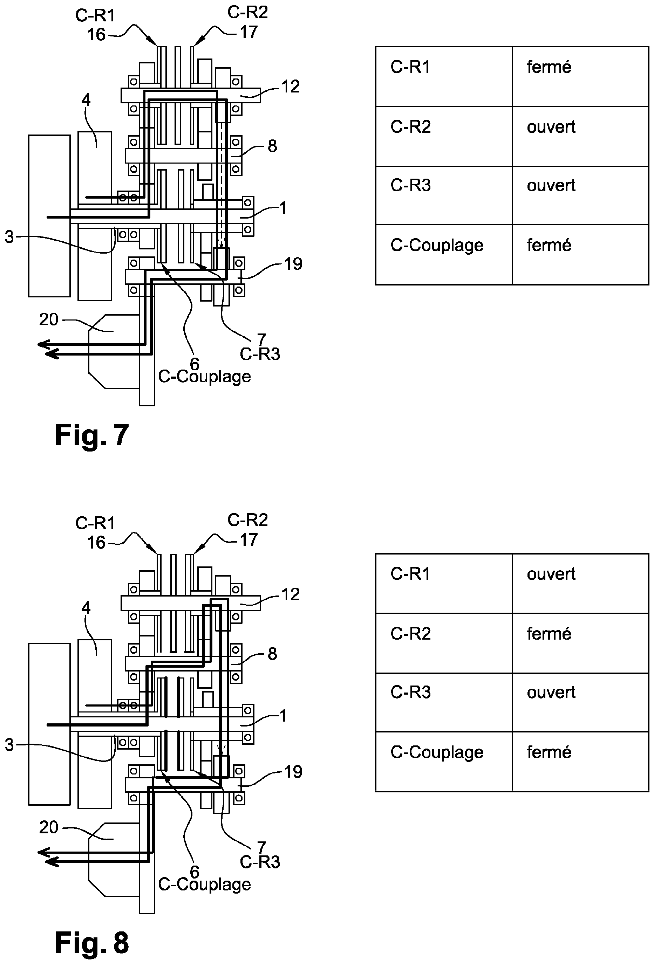

Sur la figure 7, deux coupleurs sont fermés : C-R1 et C-Couplage. La transmission est sur un mode hybride, dit « *hybride ville* » car le rapport électrique est court.

Sur la figure 8, deux coupleurs sont fermés : C-R2 et C-Couplage. La transmission est sur un mode hybride, dit « *hybride route* », car le rapport électrique est plus long.

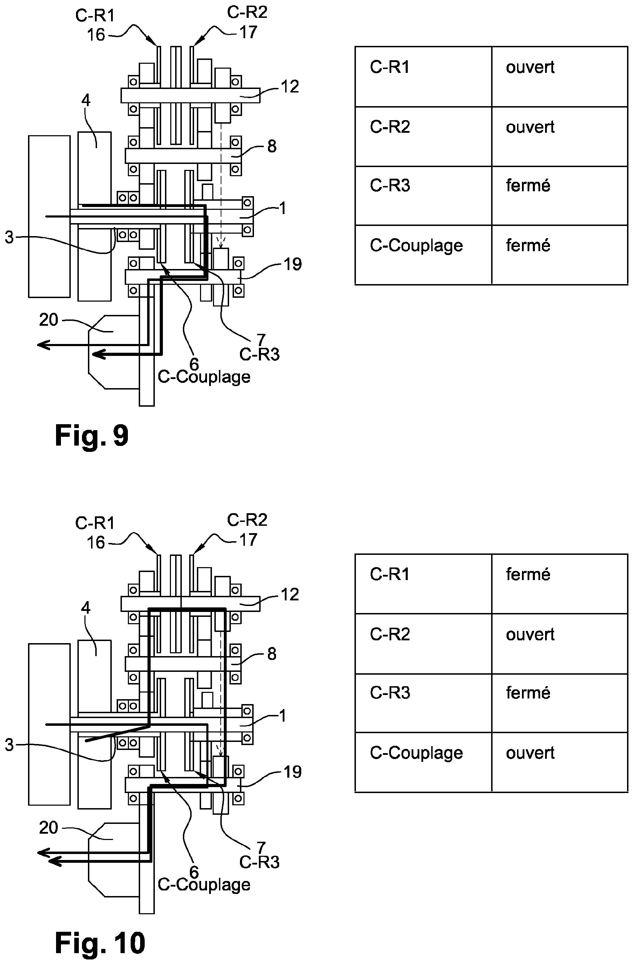

Sur la figure 9, deux coupleurs sont fermés : C-R3 et C-Couplage. La transmission est sur un mode hybride, dit « *hybride autoroute »,* car le rapport imposé par le coupleur R3 est le plus long de la transmission.

Sur la figure 10, on a un autre mode hybride, sans couplage des arbres primaires 1, 3, mais avec la fermeture simultanée des coupleurs C-R1 et CR3. Ce mode est dit « *hybride ville 2 ».*

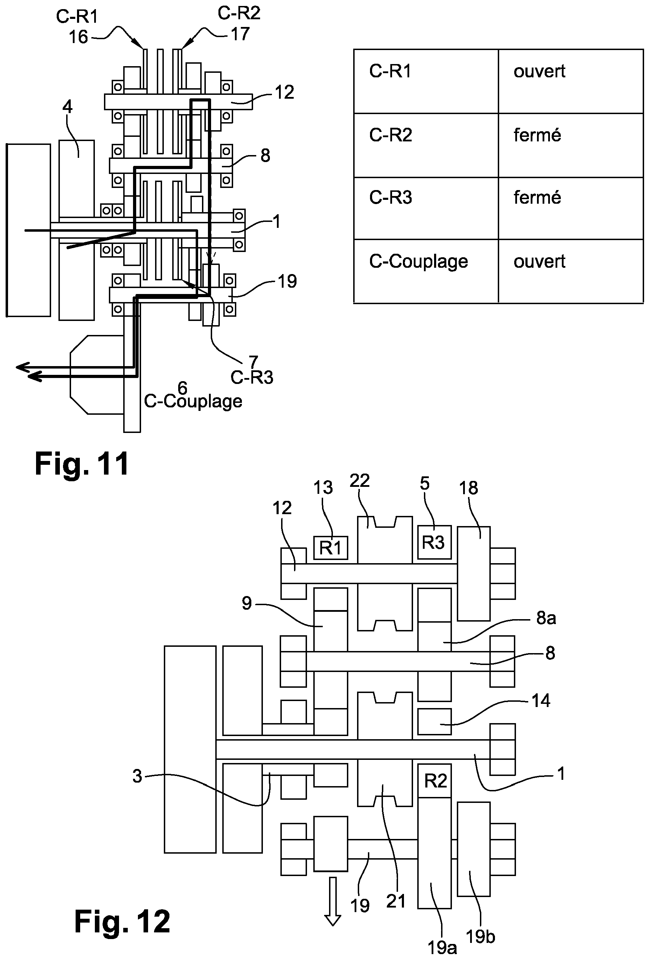

Sur le mode hybride de la figure 11, le coupleur C-Couplage est également ouvert. Les deux coupleurs C-R2 et C-R3 sont fermés. On parle de « *mode hybride route* 2 ».

Les caractéristiques techniques suivantes de cette transmission sont particulièrement avantageuses :
- c'est une transmission à passage sous couple,
- on peut utiliser la machine électrique sur le troisième rapport R3 en mode hydride,
- le moteur se synchronise vite sur les passages de vitesse grâce aux coupleurs de l'arbre primaire,
- le véhicule peut démarrer en mode thermique,
- cette transmission dispose d'un mode hybride sur le 3^{ème} rapport R3,
- la fermeture progressive du coupleur C-Couplage permet de démarrer en lançant le moteur thermique avec la machine électrique (« *démarrage à la poussette* »).

Cette transmission est particulièrement courte. Cet avantage est obtenu, en premier lieu par le fait qu'elle ne présente en longueur, que trois tranches de dentures et un groupe de couplage. Par ailleurs, l'entraxe secondaire-différentiel est réduit, car il n'y a pas de moyen de couplage sur l'arbre secondaire. De plus, le deuxième rapport R2 est en face du troisième R3. Enfin, la disposition des coupleurs sur des arbres pleins, 3 et 12, et le fait qu'il n'y a pas de pignons en face des coupleurs, contribuent à la réduction des entraxes.

Sur les variantes des figures 12, 13, et 14, les pignons fous de deuxième 14, et de troisième rapport 5, sont intervertis par rapport aux figures précédentes. L'arbre de sélection électrique 12 porte un premier groupe de couplage double 22 d'un pignon fou de premier rapport 13 et d'un pignon fou de troisième rapport 5, tandis que l'arbre primaire plein 1 porte un deuxième groupe de couplage double 21, des arbres primaires 1, 3 et d'un pignon fou de sélection de deuxième rapport 14.

Les coupleurs des figures précédentes ont été remplacés par deux coupleurs à crabots 21, 22 disposés respectivement à la place du groupe de couplage 6, 7 sur l'arbre primaire plein 1 de et à la place du groupe de couplage 16, 17 sur l'arbre de sélection électrique 12. Ces coupleurs à crabots fonctionnent en rupture de couple, mais ils permettent de réduire davantage la longueur de la transmission, et par conséquent d'adopter une machine électrique plus volumineuse. Avec des crabots, le mode « *hybride autoroute* », avec machine électrique sur le troisième rapport R3, de la figure 9, n'est plus accessible, car le couplage d'un rapport par le coupleur du primaire 21 exclut le couplage des deux arbres primaires 1 et 3. Dans la disposition de la figure 12, on peut choisir un étagement des rapports différents, avec les rapports de première et de troisième R1, R3 sur l'arbre de sélection électrique 12, et avec un rapport thermique de deuxième R2, sur le primaire. L'arbre intermédiaire 8 porte le pignon fixe 9 de première R1 et le pignon fixe 8a de troisième R3, qui engrènent avec les pignons fous 13 et 5 de première R1 et de troisième R3 de l'arbre de sélection électrique 12.

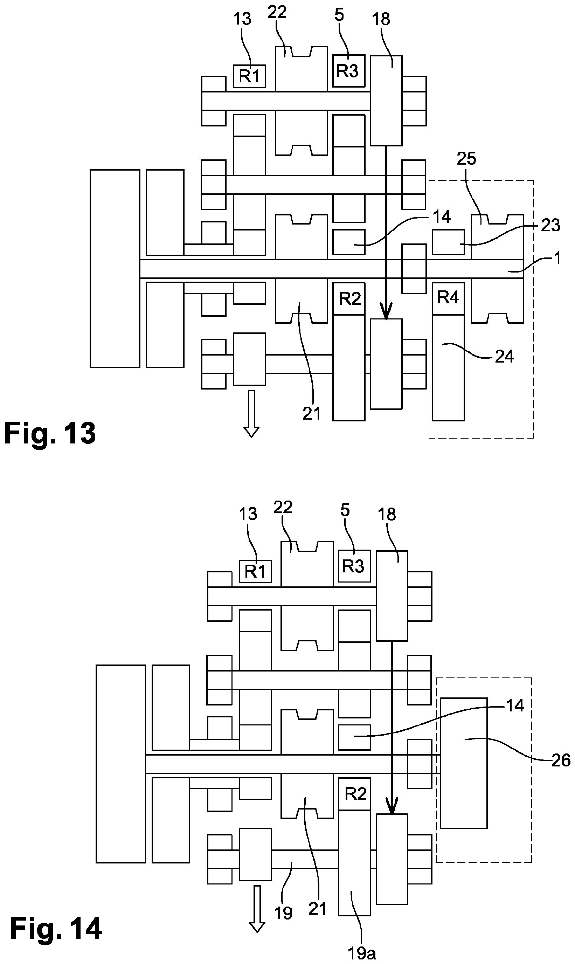

En variante, on peut tirer parti de l'encombrement réduit en longueur de la transmission, pour ajouter un quatrième rapport, sans dépasser la longueur d'une boîte de vitesses classique. Cette solution est illustrée par la figure 13, sur laquelle on retrouve la disposition des rapports R1, R2 et R3, de la figure 12. On a ajouté à l'extérieur de la descente de mouvement électrique par les pignons 18, 19a sur l'arbre secondaire, 19 un quatrième rapport R4. L'arbre primaire plein 1 porte un quatrième pignon 23, engrenant avec un pignon fixe de l'arbre secondaire 19, et un troisième coupleur à crabots 25. L'arbre primaire plein 1 porte alors un pignon fou de quatrième rapport 23, engrenant avec un pignon fixe de quatrième 24 sur l'arbre secondaire 19. La transmission comporte un troisième coupleur à crabots 25 pour coupler le pignon fou de quatrième 23 sur son arbre 19. Cette solution présente l'avantage d'apporter un gain dans la souplesse d'utilisation. Dans le cadre de cette variante, le quatrième rapport R4 peut être disposé entre les paliers du primaire 1, ou à l'extérieur : le quatrième pignon fou 23 et le troisième coupleur 25 sont alors disposés, comme sur le schéma, à l'extérieur de la descente de mouvement 18, 19a de l'arbre de sélection électrique 12 sur l'arbre secondaire 19.

Une autre variante, illustrée par la figure 14, consiste à tirer parti de la longueur réduite de la transmission, pour ajouter une seconde machine électrique 26, telle qu'un alternateur à galettes, sur l'arbre primaire plein en vis-à-vis du moteur thermique. L'arbre primaire plein 1 porte alors une deuxième machine électrique de traction, disposée à l'extérieur de la descente de mouvement 18, 19a de l'arbre de sélection électrique 12 sur l'arbre secondaire 19.

Cette disposition, de type « *micro-hybridation série* », a pour avantage principal de permettre un démarrage silencieux et rapide du moteur thermique, sans bruit de démarreur. La réduction du temps de démarrage du moteur thermique obtenue, est un critère essentiel d'agrément de conduite, sur un véhicule hybride. Elle permet aussi de déconnecter et d'arrêter le moteur thermique, dès qu'il n'est plus utile à la traction. De plus, la deuxième machine électrique procure un surcroît de puissance appréciable lors des dépassements. Cette disposition peut procurer un gain de consommation appréciable, par régénération électrique en décélération, lorsqu'on renonce temporairement au frein moteur, par exemple en mode « *sailing* », pour assurer ou maintenir des faibles charges avec la machine électrique seule, sans frein moteur.

La deuxième machine électrique 26 permet également d'améliorer les changements de rapport par synchronisation électrique, ou « *e-synchronisation* ». Cette machine électrique, en « prise directe » sur le moteur thermique, permet en effet un pilotage très fin du moteur thermique à vide. On peut synchroniser finement le régime du moteur avec la machine électrique. La rapidité de pilotage du moteur à vide se traduit par une réduction des temps de passage, et une réduction des chocs de passage, sans synchroniseur mécanique. Ce mode de synchronisation est particulièrement appréciable lors des passages de vitesse montants impliquant une décélération du moteur thermique.

Enfin, avec cette deuxième machine électrique, il est possible de récupérer l'énergie cinétique emmagasinée par le volant d'inertie du moteur thermique.

L'architecture de la figure 14 permet à la transmission de fonctionner en mode « *Hybride série »* sur le premier et le troisième rapport, selon la position du coupleur 22. Ces modes sont particulièrement bien adaptés aux faibles charges et aux faibles vitesses (par exemple usage urbain ou en embouteillage), en raison de la faible consommation de carburant, et de l'agrément de conduite.

Ils présentent également un intérêt pour réaliser la chauffe du catalyseur à un niveau de charge optimum et indépendant de la traction. On parvient ainsi à réduire les émissions, tout en stockant dans la batterie l'énergie produite lors de la mise chauffe du catalyseur. Par ailleurs, si l'on entraîne le moteur thermique sans l'allumer lors de certains changements de rapport en mode électrique, on peut réaliser des passages sous couple, par exemple passer sous couple du premier au troisième rapport électrique, grâce à une compensation de couple par la seconde machine électrique 26.

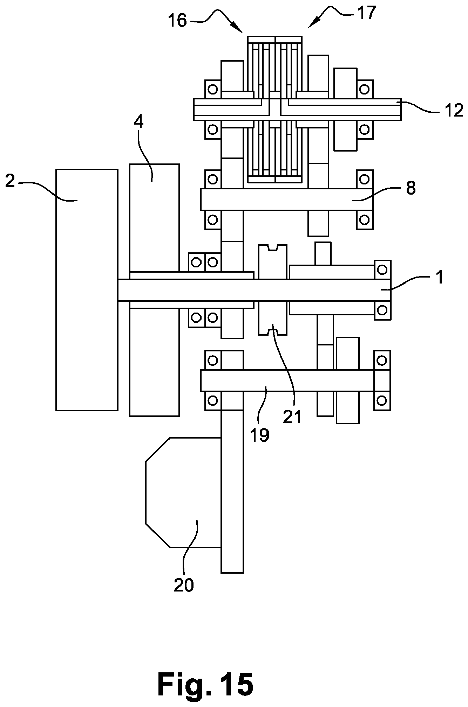

La figure 15 illustre un mode de réalisation « mixte » de la transmission, présentant un intérêt économique certain. Dans ce mode de réalisation, on retrouve un embrayage de première 16 et un embrayage de deuxième 17, sur l'arbre de sélection électrique 12. En revanche l'arbre primaire plein 1 porte un coupleur à crabot 22 comme sur les figures 11, 12 et 13. Le premier groupe de couplage 16, 17 est donc composé d'embrayages multidisques, tandis que le deuxième groupe de couplage 21 est un coupleur à crabots. Cette solution conserve les passages sous couple, mais le moteur thermique doit se synchroniser sans assistance, lors de son enclenchement.

Dans tous les modes de réalisation de l'invention, et leurs variantes non limitatives décrites ci-dessus, le procédé de transmission du couple de la machine électrique de traction de véhicule reliée à un arbre primaire creux de transmission hybride concentrique d'un arbre primaire plein relié au moteur thermique du véhicule est le même : le couple de la machine électrique passe de l'arbre primaire creux sur un arbre intermédiaire de transfert vers un arbre de sélection de rapports électriques, d'où il peut être transmis à un arbre secondaire de transmission relié aux roues du véhicule, sur l'un de deux rapports électriques 20 sélectionnables.

## Revendications

1. Transmission hybride pour véhicule automobile muni d'un moteur thermique et d'une machine électrique de traction (4), comportant deux arbres primaires concentriques (1, 3) respectivement liés au moteur thermique et à la machine électrique, dans laquelle l'arbre primaire plein (1) porte un groupe de couplage double (6, 7 ; 21) des arbres primaires (1, 3) et d'un pignon fou de sélection d'un rapport (5), de manière à pouvoir être connecté soit à l'arbre primaire creux (3) dans un mode de recharge de batteries ou sur des modes de traction hybrides, soit à une descente d'engrenage sur un arbre secondaire (19) relié aux roues du véhicule dans des modes de traction thermique ou hybrides, de manière à ce que dans certains modes de traction électriques ou hybrides, le couple de la machine électrique (4) passe de l'arbre primaire creux (3) sur un arbre intermédiaire de transfert (8) vers un arbre de sélection de rapports électriques, d'où il peut être transmis à l'arbre secondaire (19), sur l'un de deux rapports électriques sélectionnables.

2. Transmission hybride selon la revendication 1, **caractérisée en ce que** l'arbre de sélection électrique (12) porte un groupe de couplage double (16, 17 ; 22) d'un pignon fou de sélection d'un premier rapport (13) et d'un pignon fou d'un deuxième rapport (14), tandis que l'arbre primaire plein (1) porte le pignon fou de sélection d'un troisième rapport (5) et le groupe de couplage double (6, 7 ; 21) des arbres primaires (1, 3) et du pignon fou de sélection du troisième rapport (5).

3. Transmission hybride selon la revendication 2, **caractérisée en ce que** les groupes de couplage (16, 17), (6, 7) sont composés d'embrayages multidisques.

4. Transmission hybride selon la revendication 2, **caractérisée en ce que** le premier groupe de couplage (16, 17) est composé d'embrayages multidisques, tandis que le deuxième groupe de couplage (21) est un coupleur à crabots.

5. Transmission hybride selon la revendication 1, **caractérisée en ce que** l'arbre de sélection électrique (12) porte un premier groupe de couplage double (22) d'un pignon fou de premier rapport (13) et d'un pignon fou de troisième rapport (5), tandis que l'arbre primaire plein (1) porte un deuxième groupe de couplage double (21), des arbres primaires (1, 3) et d'un pignon fou de sélection de deuxième rapport (14).

6. Transmission hybride selon la revendication 5, **caractérisée en ce que** les groupes de couplage (21, 22) sont des coupleurs à crabots.

7. Transmission hybride selon la revendication 5 ou 6, **caractérisée en ce que** l'arbre primaire plein (1) porte un quatrième pignon (23), engrenant avec un pignon fixe de l'arbre secondaire (19), et un troisième coupleur à crabots (25).

8. Transmission hybride selon la revendication 7, **caractérisée en ce que** le quatrième pignon fou (23) et le troisième coupleur sont disposés à l'extérieur de la descente de mouvement (18, 19a) de l'arbre de sélection électrique (12) sur l'arbre secondaire (19).

9. Transmission hybride selon la revendication 5 ou 6, **caractérisé en ce que** l'arbre primaire plein (1) porte une deuxième machine électrique de traction, disposée à l'extérieur de la descente de mouvement (18, 19a) de l'arbre de sélection électrique (12) sur l'arbre secondaire (19).

10. Procédé de transmission du couple d'une machine électrique de traction de véhicule reliée à un arbre primaire (3) creux de transmission hybride concentrique d'un arbre primaire plein (1) relié au moteur thermique du véhicule, **caractérisé en ce que** le couple de la machine électrique (4) passe de l'arbre primaire creux (3) sur un arbre intermédiaire de transfert (8) vers un arbre de sélection de rapports électriques, d'où il peut être transmis à un arbre secondaire de transmission (19) relié aux roues du véhicule, sur l'un de deux rapports électriques sélectionnables.

## Patentansprüche

1. Hybridgetriebe für Kraftfahrzeug, das mit einer Brennkraftmaschine und einer elektrischen Zugmaschine (4) versehen ist, das zwei konzentrische Primärwellen (1, 3) umfasst, die jeweils mit der Brennkraftmaschine und der elektrischen Maschine verbunden sind, wobei die massive Primärwelle (1) eine Doppelkuppelgruppe (6, 7; 21) der Primärwellen (1, 3) und eines Freilaufritzels zur Auswahl eines Gangs (5) trägt, so dass sie entweder an die Primärhohlwelle (3) in einem Batterienlademodus oder auf Hybridzugmodi verbunden werden kann, oder mit einer Untersetzung auf einer Sekundärquelle (19), die mit den Rädern des Fahrzeugs in thermischen oder Hybridzugmodi verbunden ist, so dass in bestimmten elektrischen oder Hybridzugmodi das Drehmoment der elektrischen Maschine (4) von der Primärhohlwelle (3) auf eine Übertragungszwischenwelle (8) zu einer Welle zur Auswahl elektrischer Gänge übergeht, von wo es zu der Sekundärwelle (19) auf einen der zwei elektrischen Gänge übertragen werden kann.

2. Hybridgetriebe nach Anspruch 1, **dadurch gekennzeichnet, dass** die elektrische Auswahlwelle (12) eine Doppelkuppelgruppe (16, 17; 22) eines Freilaufritzels eines ersten Gangs (13) und eines Freilaufritzels zur Auswahl eines zweiten Gangs (14) trägt, während die Primärhohlwelle (1) das Freilaufritzel zur Auswahl eines dritten Gangs (5) und die Doppelkuppelgruppe (6, 7; 21) der Primärwellen (1, 3) und des Freilaufritzels zur Auswahl des dritten Gangs (5) trägt.

3. Hybridgetriebe nach Anspruch 2, **dadurch gekennzeichnet, dass** die Kuppelgruppen (16, 17), (6, 7) aus Multischeibenkupplungen bestehen.

4. Hybridgetriebe nach Anspruch 2, **dadurch gekennzeichnet, dass** die erste Kuppelgruppe (16, 17) aus Multischeibenkupplungen besteht, während die zweite Kuppelgruppe (21) ein Klauenkuppler ist.

5. Hybridgetriebe nach Anspruch 1, **dadurch gekennzeichnet, dass** die elektrische Auswahlwelle (12) eine erste Doppelkuppelgruppe (22) eines Freilaufritzels des ersten Gangs (13) und eines Freilaufritzels des dritten Gangs (5) trägt, während die massive Primärwelle (1) eine zweite Doppelkuppelgruppe (21), Primärwellen (1, 3) und ein Freilaufritzel zur Auswahl des zweiten Gangs (14) trägt.

6. Hybridgetriebe nach Anspruch 5, **dadurch gekennzeichnet, dass** die Kuppelgruppen (21, 22 Klauenkuppler sind.

7. Hybridgetriebe nach Anspruch 5 oder 6, **dadurch gekennzeichnet, dass** die massive Primärwelle (1) ein viertes Ritzel (23) trägt, das mit einem stationären Ritzel der Primärwelle (19) eingreift, und einen dritten Klauenkuppler (25).

8. Hybridgetriebe nach Anspruch 7, **dadurch gekennzeichnet, dass** das vierte Freilaufritzel (23) und der dritte Kuppler außerhalb des Bewegungsabstiegs (18, 19a) der elektrischen Auswahlwelle (12) auf der Sekundärwelle (19) angeordnet sind.

9. Hybridgetriebe nach Anspruch 5 oder 6, **dadurch gekennzeichnet, dass** die massive Primärwelle (1) eine zweite elektrische Zugmaschine trägt, die außerhalb des Bewegungsabstiegs (18, 19a) der elektrischen Auswahlwelle (12) auf der Sekundärwelle (19) angeordnet ist.

10. Verfahren zum Übertragen des Drehmoments einer elektrischen Kraftfahrzeug-Zugmaschine, die mit einer Primärhohlwelle (3) eines konzentrischen Hybridgetriebe einer massiven Primärwelle (1) verbunden ist, die mit der Brennkraftmaschine des Fahrzeugs verbunden ist, **dadurch gekennzeichnet, dass** das Drehmoment der elektrischen Zugmaschine (4) von der Primärhohlwelle (3) auf eine Übertragungszwischenwelle (8) zu einer Auswahlwelle elektrischer Gänge übergeht, von wo es zu einer Sekundärübertragungswelle (19), die mit den Rädern des Fahrzeugs verbunden ist, auf einen von zwei auswählbaren elektrischen Gängen übertragen werden kann.

## Claims

1. Hybrid transmission for a motor vehicle provided with a heat engine and an electric traction machine (4), including two concentric primary shafts (1, 3) respectively connected to the heat engine and to the electric machine, wherein the solid primary shaft (1) bears a dual coupling unit (6, 7; 21) of the primary shafts (1, 3) and an idler gear (5) for selecting a gear, such as to enable connection either to the hollow primary shaft (3) in a battery-recharging mode or during hybrid traction modes, or to an intermediate gear on a secondary shaft (19) connected to the wheels of the vehicle in hybrid or thermal traction modes, such that in certain hybrid or electric traction modes, the torque of the electric machine (4) passes from the hollow primary shaft (3) via an intermediate transfer shaft (8) to an electrical gear selection shaft, from where said torque can be transmitted to the secondary shaft (19) on one of two selectable electric gears.

2. Hybrid transmission according to Claim 1, **characterized in that** the electrical selection shaft (12) bears a dual coupling unit (16, 17; 22) of an idler gear (13) for selecting a first gear and an idler gear (14) for a second gear, while the solid primary shaft (1) bears the idler gear (5) for selecting a third gear and the dual coupling unit (6, 7; 21) for the primary shafts (1, 3) and the idler gear (5) for selecting third gear.

3. Hybrid transmission according to Claim 2, **characterized in that** the coupling units (16, 17), (6, 7) are made up of multi-disk clutches.

4. Hybrid transmission according to Claim 2, **characterized in that** the first coupling unit (16, 17) is made up of multi-disk clutches, while the second coupling unit (21) is a pawl coupler.

5. Hybrid transmission according to Claim 1, **characterized in that** the electrical selection shaft (12) bears a first dual coupling unit (22) for one idler gear (13) for first gear and one idler gear (5) for third gear, while the solid primary shaft (1) bears a second dual coupling unit (21) for the primary shafts (1, 3) and of an idler gear (14) for selecting second gear.

6. Hybrid transmission according to Claim 5, **characterized in that** the coupling units (21, 22) are pawl couplers.

7. Hybrid transmission according to Claim 5 or 6, **characterized in that** the solid primary shaft (1) bears a fourth gearwheel (23) that meshes with a fixed gear of the secondary shaft (19) and a third pawl coupler (25).

8. Hybrid transmission according to Claim 7, **characterized in that** the fourth idler gear (23) and the third coupler are arranged outside the intermediate gear (18, 19a) between the electrical selection shaft (12) and the secondary shaft (19).

9. Hybrid transmission according to Claim 5 or 6, **characterized in that** the solid primary shaft (1) bears a second electric traction machine arranged outside the intermediate gear (18, 19a) between the electrical selection shaft (12) and the secondary shaft (19).

10. Method for transmitting torque from an electric traction machine of a vehicle connected to a hollow hybrid transmission primary shaft (3) that is concentric to a solid primary shaft (1) connected to the heat engine of the vehicle, **characterized in that** the torque from the electric machine (4) passes from the hollow primary shaft (3) via an intermediate transfer shaft (8) to an electrical gear selection shaft, where said torque can be transmitted to a secondary transmission shaft (19) connected to the wheels of the vehicle, on one of two selectable electric gears.
